**Europäisches Patentamt**

**European Patent Office**

**Office européen des brevets**

(19)

(11) Veröffentlichungsnummer : **0 035 800**
**B1**

(12) # EUROPÄISCHE PATENTSCHRIFT

(45) Veröffentlichungstag der Patentschrift :
03.04.85

(21) Anmeldenummer : 81200055.2

(22) Anmeldetag : 19.01.81

(51) Int. Cl.⁴ : **A 01 N 59/00, A 01 N 37/16**

(54) **Bodenbehandlungsmittel.**

(30) Priorität : 02.02.80 DE 3003875

(43) Veröffentlichungstag der Anmeldung :
16.09.81 Patentblatt 81/37

(45) Bekanntmachung des Hinweises auf die Patenterteilung : 03.04.85 Patentblatt 85/14

(84) Benannte Vertragsstaaten :
BE DE FR GB IT NL

(56) Entgegenhaltungen :
DE-A- 2 506 482
DE-A- 2 536 618
DE-B- 2 654 164
US-A-    32 659
US-A- 3 912 490

(73) Patentinhaber : **NORDDEUTSCHE AFFINERIE**
**Alsterterrasse 2**
**D-2000 Hamburg 36 (DE)**

(72) Erfinder : **Perkow, Werner, Dr.**
**Starweg 88a**
**D-2070 Ahrensburg (DE)**
Erfinder : **Hopp, Hans, Dr.**
**Buchenweg 22a**
**D-2211 Itzehoe (DE)**
Erfinder : **Goebel, Gerhard**
**Mittelsteig 6**
**D-2211 Munsterdorf (DE)**

(74) Vertreter : **Fischer, Ernst, Dr.**
**Reuterweg 14**
**D-6000 Frankfurt am Main 1 (DE)**

## Beschreibung

Die Erfindung betrifft die Verwendung eines Bodenbehandlungsmittels zur Vernichtung phytopathogener Schadorganismen auf Basis einer wäßrigen Wirkstofflösung.

Nutz- und Zierpflanzen werden stark durch zahlreiche Krankheiten und Schädlinge, die vom Boden her ihren Ausgang nehmen, behindert und geschädigt. Diese sogenannten Fruchtfolgekrankheiten entstehen aus dem Bestreben, wirtschaftlich wichtige Pflanzenarten in dichter Folge auf denselben Flächen anzubauen, um so dem Zwang zur Rationalisierung, Spezialisierung und damit zur Ertragssteigerung gerecht zu werden. Die dadurch bedingte Anreicherung solcher bodenbürtiger Schadorganismen kann aber zu erheblichen Ertragsausfällen und Qualitätseinbußen führen.

Eine Bekämpfung dieser Schadorganismen geschieht auf kleineren Flächen und in Gewächshäusern häufig durch eine Entseuchung des Bodens. Hierzu hat sich die Bodendämpfung mit heißem Wasserdampf in manchen Fällen bewährt. Sie verursacht jedoch hohe Kosten und einen erheblichen gerätetechnischen Aufwand. Auf größeren Feldern, speziell bei Befall mit pflanzenpathogenen Pilzen, ist aber meistens nur eine Behandlung der bereits parasitierten und damit geschädigten Pflanze möglich oder erfolgt die Bodenentseuchung — weil billiger — mit Chemikalien. Derartige Chemikalien sind beispielsweise Aldicarb, Dazomet, Fensulfothion (common names), Dichlorpropan, Dichlorpropen, Methylisocyanat und Methylbromid sowie Diphenylsulfid, Bis-(p-chlor-phenyl)-sulfid, p-Chlorbenzyl-p-chlorphenylsulfid (DE-AS 11 08 506), am Benzolkern gegebenenfalls mit Methyl oder Chlor substituiertes 2-Chlor-benzoxazol (DE-AS 12 10 617) und bestimmte N-Alkyldithiocarbamate in Verbindung mit Trithiokohlensäuresalzen (DE-AS 12 06 199). Sie wirken teils als Berührungsgifte, teils nach Durchdringung der Bodenstruktur als Giftphase.

Das aus US-PS 3 912 490 bekannte Mittel auf Basis Harnstoffperoxid oder Wasserstoffperoxid dient der Versorgung des Wurzelwerks von Pflanzen oder Schößlingen mit einer ausreichenden Menge Sauerstoff. Um die Langzeitwirkung und die langsame Abgabe des Sauerstoffs zu steuern, enthält das vorbekannte Mittel des weiteren Puffersysteme, Komplexierungsmittel und Katalysatoren. Das vorbekannte Mittel ist nicht abiotisch, begünstigt das Pflanzenwachstum und wird auch während des Pflanzenwachstums angewendet.

Das aus LU-PS 32 659 bekannte Bodenentseuchungsmittel auf Basis Distickstofftetroxid wird als unter leichtem Druck gehaltene, gekühlte Flüssigkeit direkt in den Boden injiziert, wo es unter Nitratbildung als Düngemittel wirkt. Die Entstehung nitroser Gase läßt sich hierbei nicht vermeiden.

Alle bisher bekannten chemischen Bodenbehandlungsmittel zeigen jedoch erhebliche Nachteile. Sie sind größtenteils in Giftabteilungen eingestuft und nicht ungefährlich für den Anwender. Sie sind teilweise ein Risiko im Hinblick auf die Grundwasserreinhaltung und daher besonderen Wasserschutzgebietsauflagen unterworfen. Um Pflanzenschäden zu vermeiden, müssen zum Teil nach Anwendung und vor Aussaat der Pflanzung längere Wartezeiten, z. B. von 45 Tagen, eingehalten werden. Die meisten dieser chemischen Behandlungsmittel sind in die Höchstmengenvorordnung aufgenommen, da in eßbaren Pflanzen mit Rückständen gerechnet werden muß. Weiterhin ist ihre Anwendung zumeist temperaturabhängig. Auch ist es oft erforderlich, den Boden nach Einbringung des Mittels mit Folien abzudecken oder durch Hartwalzen der Oberfläche zu « versiegeln » und später wieder aufzulockern.

Aufgabe der Erfindung ist es, ein Bodenbehandlungsmittel bereitzustellen, das die Nachteile der vorgenannten Mittel nicht aufweist.

Die Lösung der Aufgabe besteht daher gemäß der Erfindung in der Verwendung einer wäßrigen Lösung von Wasserstoffperoxid und/oder aliphatischen Peroxisäuren mit 1 bis 4 C-Atomen in der Kohlenwasserstoffkette vor der Aussaat bzw. vor der Bepflanzung als Bodenentseuchungsmittel zur Vernichtung phytopathogener Schadorganismen.

Eine besondere günstige Einbringbarkeit ist gewährleistet, wenn das erfindungsgemäß zu verwendende Bodenbehandlungsmittel den Wirkstoff in Mengen von 0,1 bis 20 Gew.-% enthält. Je nach Feuchtigkeit des zu behandelnden Bodens ist hierdurch eine hohe Flexibilität im Hinblick auf die angestrebte Endfeuchte gegeben.

Die Einbringung des erfindungsgemäß zu verwendenden Bodenbehandlungsmittels kann durch Vermischen mit der Erde in einem geeigneten Mischer erfolgen — eine Verfahrensweise, die sich insbesondere für Gewächshauserde eignet — sie kann jedoch auch durch einfaches Gießen des verseuchten Bodens vorgenommen werden. Für eine großflächige Ausbringung eignen sich solche landwirtschaftlichen Maschinen, wie sie bereits zur Ausbringung der eingangs genannten Chemikalien zur Bodenentseuchung verwendet werden. Auch hierdurch ist gewährleistet, daß die bodenbürtigen Schadorganismen innerhalb von 12 bis 48 Stunden vernichtet sind.

Bevorzugte gemäß der Erfindung zu verwendende Bodenbehandlungsmittel enthalten als Wirkstoff Wasserstoffperoxid, Peressigsäure, Perpropionsäure, Perbuttersäure und/oder Perglutarsäure. Dabei brauchen die Wirkstoffe keineswegs in reiner Form eingesetzt zu werden. Es sind durchaus erhebliche zusätzliche Gehalte der den Peroxisäuren entsprechenden Karbonsäuren zulässig.

Es können handelsübliche Gemische, wie beispielsweise

10 % Peressigsäure
76 % Essigsäure
1- 5 % Wasserstoffperoxid
1 % Schwefelsäure
8-12 % Wasser

zum Einsatz kommen.

Die Anwendung des erfindungsgemäß einzusetzenden Bodenbehandlungsmittel ist weitgehend temperaturunabhängig. Ein Abdecken des Bodens ist nicht erforderlich. Geruchliche Belästigung tritt nicht auf. Nachbauschäden entstehen bei Einhaltung einer kurzen Wartezeit von nur wenigen Tagen nicht. Eine Parasitierung und Schädigung der Kulturpflanzen sind ausgeschlossen. Wild und Vögel sind nicht gefährdet.

Da Wasserstoffperoxid und die Peroxisäuren im Boden zu toxikologisch ungefährlichen Substanzen umgewandelt werden, sind die Mittel vom Standpunkt der Rückstandsbildung oder Anreicherung im Boden völlig unbedenklich. Die Kosten liegen so günstig, daß auch großflächige Behandlungen möglich werden.

Das erfindungsgemäß zu verwendende Bodenbehandlungsmittel hat einen breiten Wirkungsbereich. Beispielsweise können folgende Schadorganismen vernichtet werden :

Phytopathogene Pilze ;

Ophiobolus graminis, Erreger der Schwarzbeinigkeit des Weizens ; Cercosporella herpotrichoides, Erreger der Halmbruchkrankheit des Getreides ;

Fusarium spec., Erreger verschiedenster Krankheiten an vielen Kulturen und Zierpflanzen ;

Typhula incarnata, Erreger der Typhula-Fäule des Getreides ;

Rhizoctonia spec., Erreger vieler Wurzel-, Halm- und Stengelkrankheiten der Kultur- und Zierpflanzen.

Phytopathogene Bakterien :

Xanthomonas campestris, Erreger der Schwarzadrigkeit des Kohls ;

Pseudomonas spec., Erreger vieler Fäulnis- und Welkekrankheiten in Kartoffel- und Gemüsekulturen sowie Zierpflanzen.

Phytopathogene Nematoden :

Freilebende Wurzelnematoden (Paratylenchus-Arten und Rotylenchus-Arten) ;

Wurzelgallennematoden (meloidogyne-Arten) ;

Zystennematoden (Heterodera-Arten).

Nematoden sind weit verbreitete Parasiten, besonders im Kartoffel-, Gemüse-, Getreide- und Zierpflanzenbau.

Die Erfindung wird durch folgende Beispiele beispielsweise und näher erläutert.

Beispiel 1

Auf einem in der Fruchtfolge zum dritten Mal mit Weizen bestandenen und durch den Schadpilz Ophiobolus graminis — den Erreger der Schwarzbeinigkeit — verseuchten Feld wurde auf vier eingestreuten, je 10 m² großen Versuchsparzellen der Boden maschinell 15 cm tief mit einer 1 % Peressigsäure enthaltenden wäßrigen Lösung befeuchtet, wobei die Gesamtmenge Flüssigkeit etwa 4 000 Liter/Hektar entsprach. 3 Tage darauf wurde auf dem gesamten Feld Weizen gesät.

Die Befallsbewertung wurde zur Zeit der Milchreife vorgenommen. Auf den nicht behandelten Teilen des Weizenfeldes waren 10 % der Halme sehr stark befallen und praktisch abgestorben, weitere 35 % der Halme waren mehr oder weniger stark befallen. Mykologische Laboruntersuchungen der befallenen Halme ergaben als Ursache den Pilz Ophiobolus graminis. Auf den behandelten Versuchsparzellen zeigten etwa 2 % der Halme leichte Verfärbungen, die bei mykologischer Untersuchung jedoch nicht eindeutig identifiziert werden konnten. Der Kornertrag betrug bei der Beerntung auf den mit Peressigsäure behandelten Versuchsparzellen umgerechnet 54 Doppelzentner/Hektar, auf dem unbehandelten Feld 41 dz/ha.

Beispiel 2

20 Versuchsgefäße wurden mit Erde gefüllt, die durch den bakteriellen Erreger der Schwarzadrigkeit des Kohls (Xanthomonas campestris) verseucht war. Bei der Hälfte der Gefäße wurde die Erde mit einer 0,5 %igen wäßrigen Lösung von Perpropionsäure durchfeuchtet, bei der zweiten Hälfte mit Wasser der gleiche Feuchtigkeitsgehalt eingestellt. Bei 5 Tage später gepflanzten, 10 cm hohen Kohlrabi-Setzlingen ergab sich in der mit Perpropionsäure behandelten Anordnung gesundes, kräftiges Wachstum, während in den unbehandelten Gefäßen die Pflanzen nach 3 Wochen alle an Schwarzadrigkeit eingegangen waren.

Beispiel 3

In einer wie im Beispiel 1 angelegten Versuchsanordnung war der Boden durch Wurzelnematoden (Paratylenchus spec. und Heterodera spec.) verseucht. Die Versuchsparzellen wurden mit 2 % Peressigsäure enthaltender wäßriger Lösung 20 cm tief durchfeuchtet und 3 Tage danach auf der Gesamtfläche Möhrensaat eingebracht. Kurz nach dem Auflaufen starben auf den unbehandelten Flächen etwa 50 % der aufgegangenen Pflänzchen ab, während die mit verdünnter Peressigsäure behandelten Parzellen einen vollen Bestand erreichten. Die Ernteerträge waren (umgerechnet) 310 Doppelzentner/Hektar auf unbehandelter und 540 dz/ha auf behandelter Fläche.

Beispiel 4

20 Versuchsgefäße wurden mit Erde gefüllt, die einem mit dem Erreger der Kohlhernie, dem Pilz Plasmodiophora brassicae, verseuchten Freilandboden entnommen war. In 10 Gefäßen wurde die Erde mit einer 1 %igen wäßrigen Lösung von Perglutarsäure durchfeuchtet. In den restlichen Gefäßen wurde statt dessen die gleiche Menge Wasser zur Durchfeuchtung verwendet. Anschließend wurden die Gefäße mit 10 bis 15 cm großen Blumenkohlpflanzen besetzt. In den Gefäßen mit behandelter Erde entwickelten sich die Pflanzen gesund an Wurzeln und Blättern und brachten zu über 90 % eine normale Ernte. In den Gefäßen mit unbehandelter Erde bildeten sich verkrüppelte Pflanzen mit starken Wucherungen an den Wurzeln, dem bekannten Erscheinungsbild der Kohlhernie.

Der gleiche Versuchs- und Erfolgsverlauf ergibt sich bei Verwendung einer einprozentigen wäßrigen Lösung von Perbuttersäure.

Beispiel 5

Auf einem in der Fruchtfolge Gerste-Weizen-Weizen stehenden Feld war die letzte Ernte durch Befall mit dem Erreger der Fußkrankheit, dem Schadpilz Cercosporella herpotrichoides, stark gemindert. Auf abgegrenzten Versuchsparzellen wurde dieser Boden maschinell 15 cm tief mit einer 1,2 % Wasserstoffperoxid enthaltenden wäßrigen Lösung durchfeuchtet, wobei die Gesamt-menge Flüssigkeit etwa 4 000 Liter/Hektar ent-sprach. 5 Tage später wurde auf behandelten und unbehandelten Flächen des Feldes erneut Weizen eingesät. Die Befallsauswertung erfolgte zum Zeitpunkt der Ährenblüte. Auf den unbehandelten Teilen waren 88 % der Halme von Fußkrankheit befallen, und es trat verbreitet Lagerung auf. In den behandelten Parzellen wiesen dagegen nur 7 % der Halme Befall auf. Der Ernteertrag betrug auf den mit Wasserstoffperoxid behandelten Flächen umgerechnet 71 Doppelzentner/Hektar, auf dem unbehandelten Feld 57 dz/ha.

Beispiel 6

20 Versuchsgefäße wurden mit Erde gefüllt, die mit dem Bacterium Pseudomonas marginalis, dem Erreger der Salatfäule, verseucht war. Bei 10 Gefäßen wurde die Erde mit einer 0,5 %igen wäß-rigen Lösung von Wasserstoffperoxid durch-feuchtet, bei den restlichen 10 Gefäßen mit der entsprechenden Menge Wasser. 4 Tage später wurden alle Gefäße mit Kopfsalat bepflanzt. Die mit Wasserstoffperoxid behandelten Gefäße brachten eine verlustfreie Ernte, während der gesamte Pflanzenbestand in den unbehandelten Gefäßen durch Fäulnis verloren ging.

Beispiel 7

20 Versuchsgefäße wurden mit Erde gefüllt, die einem stark mit Nematoden vorwiegend der Gattung Heterodera avenae befallenen Acker entnommen war. 10 Gefäße wurden mit einer 2 %igen wäßrigen Lösung von Wasserstoffperoxid durchfeuchtet, die übrigen Gefäße mit der entsprechenden Menge Wasser. Nach Einsaat von Hafer, 2 Tage nach Behandlung, und späterem Auflaufen verkümmerten die auf der unbehandelten Erde wachsenden Pflanzen, und nur etwa 10 % kamen zur Rispenbildung. Die in behandelter Erde wachsenden Pflanzen zeigten dagegen normales Wachstum bis zur Reife.

Ansprüche

1. Verwendung einer wäßrigen Lösung von Wasserstoffperoxid und/oder aliphatischen Peroxisäuren mit 1 bis 4 C-Atomen in der Kohlenwasserstoffkette vor der Aussaat bzw. vor der Bepflanzung als Bodenentseuchungsmittel zur Vernichtung phytopathogener Schadorganismen.

2. Verwendung nach Anspruch 1 einer waßrigen Lösung mit einem Wirkstoffgehalt von 0,1 bis 20 Gew.-%.

3. Verwendung nach einem der Ansprüchen 1, 2 einer wäßrigen Lösung von Wasserstoffperoxid, Peressigsäure, Perpropinsäure, Perbuttersäure und/oder Perglutarsäure.

Claims

1. The use of an aqueous solution of hydrogen peroxide and/or aliphatic carboxylic peroxiacids having 1 to 4 carbon atoms in the carbon chain as an agent for the disinfection of the soil to destruct therein noxious organisms phytopathogene before sowing or planting.

2. The use of an aqueous solution according to claim 1 with a content of effective substance from 0.1 to 20 % per weight.

3. The use of an aqueous solution according to claim 1 or 2 of hydrogen peroxide, peroxiacetic acid, peroxipropionic acid, peroxibutyric acid and/or peroxiglutaric acid.

Revendications

1. Utilisation d'une solution aqueuse d'eau oxygénée et/ou de peracide aliphatique ayant de 1 à 4 atomes de carbone dans la chaîne hydrocarbonée, avant l'ensemencement ou avant la plantation, à titre d'agent de désinfection du sol, pour la destruction d'organismes nuisibles phyto-pathogènes.

2. Utilisation suivant la revendication 1, d'une solution aqueuse ayant une teneur en substances actives de 0,1 à 20 % en poids.

3. Utilisation suivant l'une des revendications 1 ou 2, d'une solution aqueuse d'eau oxygénée, d'acide peracétique, d'acide perpropionique, d'acide perbutyrique et/ou d'acide perglutarique.